# FASCICULE DE BREVET EUROPEEN

(11) **EP 3 720 711 B1**
(45) Date de publication et mention de la délivrance du brevet: **04.12.2024**
(21) Numéro de dépôt: 18826433.7
(22) Date de dépôt: 06.12.2018
(51) Int. Cl.: B33Y 10/00, B33Y 30/00, B29C 64/118, B29C 70/32, B29C 70/38, F02C 7/24

(54) **PROCÉDÉ DE FABRICATION ADDITIVE IN SITU D'UN REVÊTEMENT ABRADABLE SUR UN CARTER DE TURBOMACHINE**
VERFAHREN ZUR IN-SITU ADDITIVEN HERSTELLUNG EINER ABREIBBAREN BESCHICHTUNG AUF EINEM GEHÄUSE EINER TURBOMASCHINE
METHOD FOR IN SITU ADDITIVE MANUFACTURING OF AN ABRADABLE COATING ON A TURBOMACHINE CASING

(30) Priorité: 06.12.2017 FR 1761727; 06.12.2017 CA 2988229
(43) Date de publication de la demande: 14.10.2020
(73) Titulaire: Safran Aircraft Engines, 75015 Paris (FR)
(72) Inventeur: JODET, Norman, Bruno, André, 77550 Moissy-Cramayel (FR); GONZALEZ, Jéremy, Paul, Francisco, 77550 Moissy-Cramayel (FR); MARDJONO, Jacky, Novi, 77550 Moissy-Cramayel (FR); DUBOURG, Arnaud, Montreal Québec H3W 1T5 (CA); FOTSING, Edith-Roland, Montreal Québec H3C 3A7 (CA); ROSS, Annie, Montreal Québec H3C 3A7 (CA); THERRIAULT, Daniel, Montreal Québec H3C 3A7 (CA)
(74) Mandataire: Cabinet Beau de Loménie
(86) Numéro de dépôt international: PCT/FR2018/053130
(87) Numéro de publication internationale: WO 2019/110936

(56) Documents cités:
- WO-A1-2011/061430
- GB-A- 2 484 350

## Description

### Arrière-plan de l'invention

La présente invention se rapporte au domaine général de la fabrication de pièces en matériau polymère, notamment thermodurcissable, de pièces métalliques, en alliage métallique ou en céramique par fabrication additive et elle concerne plus particulièrement, mais non exclusivement, la fabrication de revêtements abradables présentant des fonctionnalités acoustiques, notamment pour carter de soufflante.

Le contrôle des nuisances sonores dues aux avions aux alentours des aéroports est devenu en enjeu de santé public. Des normes et règlements de plus en plus sévères sont imposés aux fabricants d'avions et aux gestionnaires d'aéroports. Par conséquent, construire un avion silencieux est devenu au fil des années un argument de vente marquant. Actuellement, le bruit généré par les moteurs d'avions est atténué par des revêtements acoustiques à réaction localisée qui permettent de diminuer l'intensité sonore du moteur sur un ou deux octaves sur le principe des résonateurs de Helmholtz, ces revêtements se présentant classiquement sous la forme de panneaux composites composés d'une plaque rigide associée à une âme nid d'abeille recouvert d'une peau perforée et disposés au niveau de la nacelle ou des conduits de propagation amont et aval. Toutefois, dans les moteurs de nouvelle génération (par exemple dans les turbosoufflantes), les zones disponibles pour les revêtements acoustiques sont amenées à se réduire considérablement comme dans la technologie UHBR (Ultra-High-Bypass-Ratio). De plus, ces zones de carters en matériau composite sont susceptibles de présenter des défauts de forme qu'il convient de rattraper par une opération additionnelle d'usinage avant la mise en place du revêtement.

Il est donc important de proposer des nouveaux procédés et/ou de nouveaux matériaux (notamment des matériaux poreux) permettant d'éliminer ou de réduire de façon significative le niveau de bruit produit généré par les moteurs d'avion surtout dans les phases de décollage et d'atterrissage et sur une gamme fréquentielle plus large qu'actuellement incluant les basses fréquences tout en conservant les performances du moteur. C'est la raison pour laquelle on cherche aujourd'hui de nouvelles technologies de réduction de bruit pour diminuer cette nuisance ainsi que de nouvelles surfaces de traitements acoustiques et ceci avec un impact minimal sur les autres fonctionnalités du moteur comme la consommation spécifique de carburant qui constitue un avantage commercial important.

Or, au sein des moteurs d'avion, le bruit issu de la soufflante est un des premiers contributeurs aux nuisances sonores favorisés par l'augmentation du taux de dilution que recherchent ces nouvelles générations d'avions.

Par ailleurs, il est aujourd'hui courant et avantageux d'avoir recours à des procédés de fabrication additive en lieu et place des procédés traditionnels de fonderie, de forge ou d'usinage dans la masse pour réaliser facilement, rapidement et à moindre coût des pièces tridimensionnelles complexes. Le domaine aéronautique se prête d'ailleurs particulièrement bien à l'utilisation de ces procédés. Parmi ceux-ci, on peut citer par exemple le procédé de dépôt énergétique direct par fil (Wire Beam Déposition) ou ceux décrits dans GB2484350 ou WO2011/061430.

### Objet et résumé de l'invention

La présente invention vise à proposer une méthode de mise en forme d'un nouveau matériau abradable, permettant en outre de réduire de manière significative le bruit généré par les turboréacteurs d'avion et notamment celui généré par l'ensemble soufflante-OGV. Un but de l'invention est également de rattraper les défauts de forme résultant de la nature composite du substrat sur lequel ce matériau abradable est destiné à être déposé.

A cet effet, il est prévu un procédé de dépôt in situ par fabrication d'un revêtement abradable sur un carter de turbomachine consistant à déposer sur une surface interne d'un carter de turbomachine un filament d'un matériau abradable selon une trajectoire de dépôt prédéfinie afin de créer un échafaudage tridimensionnel de filaments formant entre eux un réseau ordonné de canaux, le procédé étant caractérisé par les étapes suivantes :
positionner un système de dépôt de matière filamentaire au niveau d'un axe longitudinal dudit carter à une position et une distance déterminée par rapport à ladite surface interne dudit carter,
déposer une première couche dudit revêtement abradable sur les 360° de la circonférence dudit carter par un déplacement circonférentiel relatif entre ledit carter et ledit système de dépôt de matière filamentaire,
effectuer une rotation dudit système de dépôt de matière filamentaire d'un premier angle déterminé et positionner ledit système de dépôt de matière filamentaire au niveau dudit axe longitudinal dudit carter à une position et une distance déterminée par rapport à ladite première couche dudit revêtement abradable,
déposer sur un secteur dudit carter par un déplacement axial relatif entre ledit carter et ledit système de dépôt de matière filamentaire, une deuxième couche dudit revêtement abradable sur ladite première couche dudit revêtement abradable,
effectuer un déplacement circonférentiel relatif entre ledit carter et ledit système de dépôt de matière filamentaire d'un écart angulaire déterminé correspondant au premier secteur déjà couvert lors du dépôt de ladite deuxième couche de revêtement abradable,
et répéter l'étape de dépôt sur ledit secteur de carter et l'étape de déplacement circonférentiel relatif selon ledit écart angulaire déterminé pour les secteurs suivants jusqu'à couvrir les 360° de la circonférence dudit carter, et
après avoir effectué une rotation dudit système de dépôt de matière filamentaire d'un deuxième angle déterminé, reprendre l'ensemble des étapes précédentes, à l'exception de la première, pour les couches suivantes jusqu'à obtenir une épaisseur de revêtement abradable souhaitée.

Ainsi, on obtient une microstructure poreuse à porosité régulière et ordonnée qui assure une absorption importante des ondes acoustiques par dissipation visco-thermique au sein des canaux.

De préférence, préalablement au dépôt de ladite première couche dudit revêtement abradable, il est déposé sur ledit carter de turbomachine une couche d'un matériau de rattrapage de jeu pour obtenir une surface de dépôt de géométrie connue.

Avantageusement, le dépôt de matière filamentaire est effectué par une pluralité de buses d'éjection dont le positionnement vertical de chacune desdites buses d'éjection est ajustable de façon indépendante.

Selon le mode de réalisation envisagé, ladite étape de rotation dudit système de dépôt filamentaire est effectuée deux fois par rotation successive de 90°, le premier angle déterminé étant égal à 90° ou encore ladite étape de rotation dudit système de dépôt filamentaire est effectuée autant de fois qu'il existe de directions déterminées d'orientation des filaments différentes. Plus particulièrement, ladite étape de rotation dudit système de dépôt filamentaire est effectuée six fois par rotation successive de 30°, le premier angle déterminé étant égal à 30°.

De préférence, des couches supplémentaires dudit revêtement sont ajoutées localement pour tenir compte d'une géométrie non axisymétrique dudit carter de turbomachine.

De préférence, ledit carter de turbomachine est un carter de soufflante en matériau composite tissé.

### Brève description des dessins

D'autres caractéristiques et avantages de la présente invention ressortiront de la description détaillée faite ci-dessous, en référence aux figures suivantes dépourvues de tout caractère limitatif et sur lesquelles :
- La figure 1 illustre de façon schématique une architecture de turbomachine d'aéronef dans laquelle est mise en oeuvre le procédé de fabrication in situ de revêtement selon l'invention,
- La figure 2 est une vue schématique d'un premier exemple de dispositif pour la mise en oeuvre du procédé de l'invention,
- La figure 3 est une vue schématique d'un second exemple de dispositif pour la mise en oeuvre du procédé de l'invention,
- La figure 4 illustre un système de dépôt de matière filamentaire utilisé dans le dispositif de la figure 2,
- La figure 5 est un éclaté d'un échafaudage tridimensionnel de filaments cylindriques obtenu par le système de la figure 4,
- Les figures 6A à 6D sont des exemples de réseaux ordonnés de canaux obtenus par le système de la figure 4, et
- La figure 7 montre les différentes étapes du procédé de fabrication in situ de revêtement selon l'invention.

### Description détaillée de l'invention

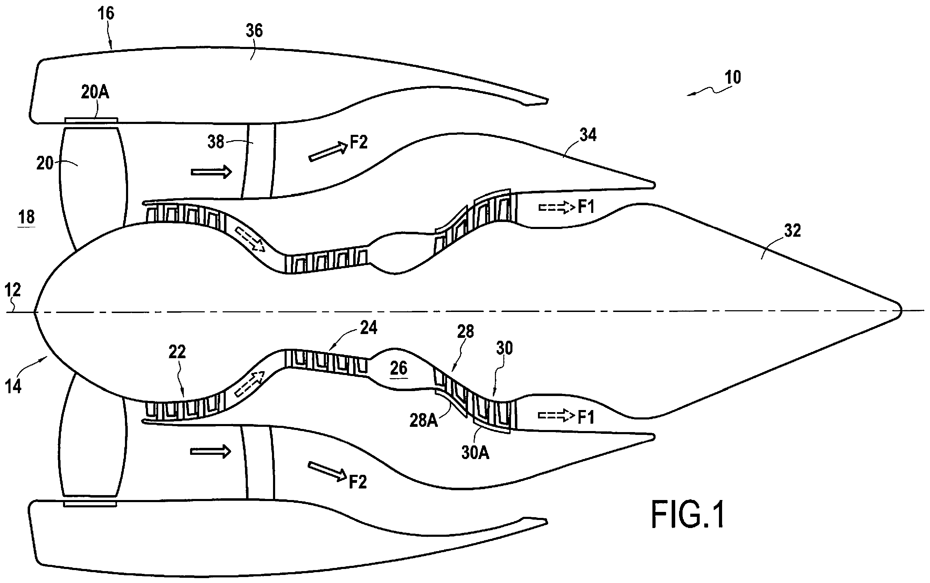

La figure 1 montre de façon très schématique une architecture de turbomachine d'aéronef, en l'espèce un turboréacteur à double flux, au niveau de laquelle est mis en oeuvre le procédé de fabrication d'un revêtement en matériau abradable à propriétés acoustiques de l'invention.

Classiquement, un tel turboréacteur à double flux 10 possède un axe longitudinal 12 et se compose d'un moteur à turbine à gaz 14 et d'une nacelle annulaire 16 centrée sur l'axe 12 et disposée concentriquement autour du moteur.

D'amont en aval, selon le sens d'écoulement d'un flux d'air ou de gaz traversant le turboréacteur, le moteur 14 comprend une entrée d'air 18, une soufflante 20, un compresseur basse-pression 22, un compresseur haute-pression 24, une chambre de combustion 26, une turbine haute-pression 28 et une turbine basse-pression 30, chacun de ces éléments étant disposé selon l'axe longitudinal 12. L'éjection des gaz produits par le moteur est effectuée au travers d'une tuyère se composant d'un corps central annulaire 32 centré sur l'axe longitudinal 12, d'un capot primaire annulaire 34 entourant de façon coaxiale le corps central pour délimiter avec celui-ci un canal annulaire d'écoulement du flux primaire F1, et d'un capot secondaire annulaire 36 entourant de façon coaxiale le capot primaire pour délimiter avec celui-ci un canal annulaire d'écoulement du flux secondaire F2 coaxial au canal d'écoulement primaire et dans lequel sont disposées des aubes redresseuses 38 (dans l'exemple de réalisation illustré, la nacelle 16 du turboréacteur et le capot secondaire 36 de la tuyère sont une seule et même pièce). Les capots primaires et secondaires intègrent notamment les carters intermédiaires de turbines 28A et 30A entourant les aubes mobiles des rotors de turbines et le carter de soufflante 20A entourant les aubes mobiles du rotor de soufflante.

Selon l'invention, il est proposé d'apposer, par fabrication additive, sur les parois internes de carters faisant faces à des aubes mobiles de rotor, un revêtement doté de fonctionnalités abradable et acoustique et qui se présente sous la forme d'un échafaudage tridimensionnel de filaments formant entre eux un réseau ordonné de canaux. Selon la configuration envisagée, des interconnections entre les canaux peuvent exister de manière régulière lors de la superposition des différentes couches du revêtement destinées à générer ces différents canaux. Cette paroi est préférentiellement une paroi d'une turbomachine, telle qu'un turboréacteur d'avion, montée en périphérie immédiate des aubes mobiles, et plus particulièrement la paroi interne du carter de soufflante 20A en composite tissé 3D disposé en périphérie des aubes de soufflante. Toutefois, un dépôt sur le ou les carters de turbine 28A, 30A peut aussi être envisagé sous réserve bien entendu que le matériau abradable de type métallique ou céramique présente alors des propriétés adaptées à l'environnement à très haute température de la turbine.

L'intérêt de la fonctionnalité abradable est de rendre l'ensemble rotor-carter compatible avec les déformations que subissent les aubes mobiles en rotation lorsque ces dernières sont soumises à la somme des efforts aérodynamiques et centrifuges.

Par matériau abradable on entend la capacité du matériau à se disloquer (s'éroder) en fonctionnement au contact d'une pièce en regard (faible résistance au cisaillement) et sa résistance à l'usure suite aux impacts de particules ou corps étrangers qu'il est amené à ingérer en fonctionnement. Un tel matériau doit en outre garder voire favoriser de bonnes propriétés aérodynamiques, présenter des résistances à l'oxydation et à la corrosion suffisantes et un coefficient de dilatation thermique du même ordre que la couche ou le substrat sur lequel il est déposé, dans ce dernier cas le matériau composite tissé formant les parois de carter.

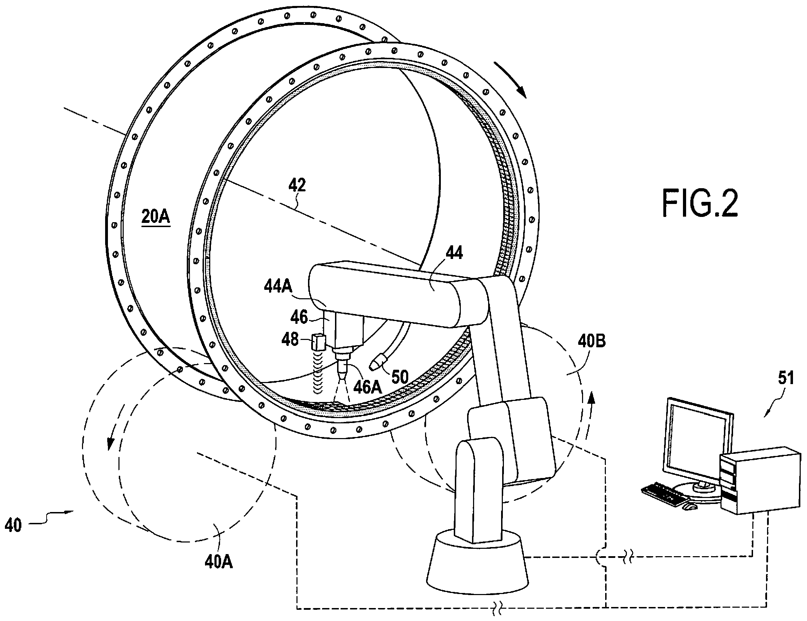

La figure 2 illustre un premier exemple de dispositif permettant la réalisation d'un tel revêtement à propriétés acoustiques par le dépôt continu de filaments de matériau abradable au niveau d'une paroi interne de turbomachine tel qu'un carter de soufflante 20A.

Ce dispositif comporte un support de carter 40 destiné à positionner le carter de soufflante 20A de façon à ce que son axe longitudinal 42 soit parallèle au sol, favorisant ainsi le dépôt de la matière filamentaire par gravité (dépôt vertical de matériau vers le bas) sur n'importe quel point de la paroi interne du carter. Ce support peut par exemple être constitué de deux rouleaux d'entraînement synchronisés 40A, 40B pour entraîner simultanément le carter en rotation autour de son axe longitudinal, assurant ainsi un degré de liberté en rotation selon cet axe longitudinal.

Le dispositif comporte également un ensemble mécanique 44 muni de plusieurs articulations et équipé à une extrémité libre 44A d'un système de dépôt de matière filamentaire 46 comportant au moins une buse d'éjection 46A par lequel le matériau abradable est éjecté avec précision. Typiquement, un tel ensemble mécanique est constitué au moins par une machine 3 axes ou, comme illustré, par un robot possédant des « axes numériques » de précision (positionnement de l'ordre de 5 microns) permettant via un logiciel connu approprié de commander l'impression selon une trajectoire de dépôt définie par l'utilisateur. Grâce à ces équipements, il est donc possible de garantir un dépôt précis de filaments dans un espace tridimensionnel déterminé, en contrôlant les paramètres d'impression tels que la vitesse d'écoulement du matériau, la position et vitesse de déplacement de l'ensemble mécanique.

Plus précisément, cet ensemble mécanique 44 dispose d'un degré de liberté en translation selon l'axe longitudinal du carter de façon à atteindre n'importe quel point de sa paroi interne pour déposer le matériau abradable. Il dispose également d'un degré de liberté en translation verticale, de sorte que la distance par rapport à la surface de dépôt puisse être ajustée en temps réel. De plus, ce degré de liberté permet d'adapter le système de dépôt aux variations de diamètre pouvant être observées entre différentes architectures de turboréacteurs. Pour ce faire, un capteur de distance 48 solidaire ou disposé à proximité de la buse d'éjection 46A est prévu afin de mesurer les distances entre cette buse d'éjection et le carter ou le matériau abradable. Ce capteur peut en outre être utilisé, via l'utilisation d'algorithmes connus appropriés, pour permettre un contrôle métrologique de la géométrie dimensionnelle initiale et finale qui, dans le cas particulier d'un carter de soufflante, est non axisymétrique.

De façon optionnelle et selon la nature du matériau utilisé, le dispositif peut aussi comporter un module de solidification 50 pour favoriser et accélérer le processus de solidification du matériau abradable déposé. Ce module peut être formé par un dispositif d'émission d'ondes lumineuses (UV, infrarouges ou autre), par un ou plusieurs ventilateurs soufflants en direction du matériau abradable ou bien par une ou plusieurs résistances chauffantes ou encore par tout autre système chauffant analogue, voire même éventuellement par un dispositif réfrigérant selon la nature du matériau utilisé, ces différents dispositifs pouvant fonctionner seuls ou en combinaison entre eux.

Le contrôle et la commande de l'ensemble des constituants du dispositif sont assurés par une unité de gestion 51, typiquement un microcontrôleur ou un microordinateur, qui gère le dépôt de matériau abradable en liaison avec de la rotation du carter de soufflante, le tolérancement dimensionnel final en fonction des données obtenues du capteur de distance 48 et lorsqu'il est présent le contrôle de la solidification via le module 50.

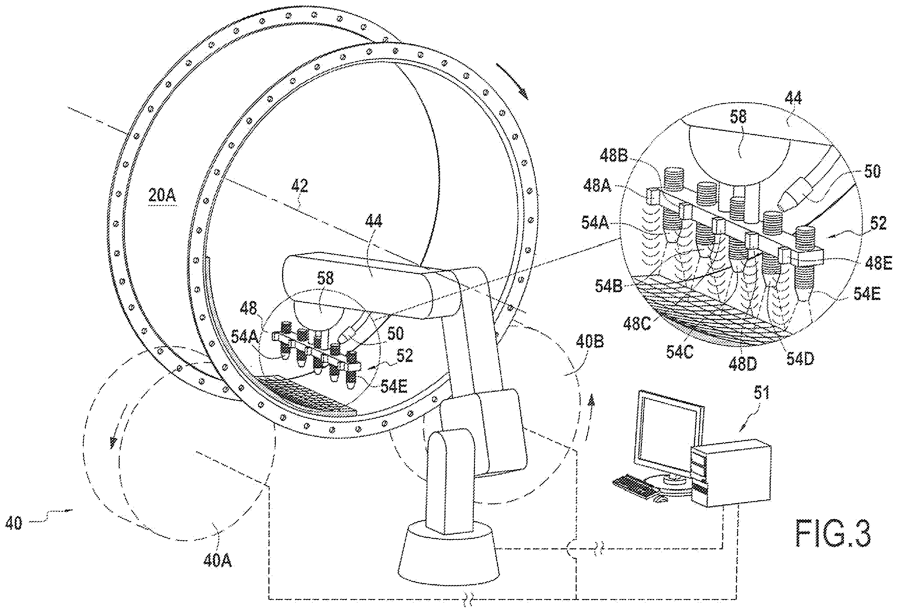

La figure 3 illustre une variante de réalisation du dispositif (les éléments inchangés portent les mêmes références) dans laquelle la buse unique d'éjection est remplacée par un système multi-buses 52 permettant d'accélérer le dépôt du matériau abradable d'un facteur supérieur au nombre de buses et comportant plusieurs buses d'éjection 54A - 54E alignées sur l'axe d'une pièce rigide 56 qui les supporte et dont le positionnement vertical de chacune de ces buses, mesurable par un capteur de distance associé 48A - 48E, est ajustable de façon indépendante afin de garantir une distance optimale entre chaque buse et la surface sur laquelle la matière filamentaire est déposée (tenant compte de la forme cylindrique du carter de soufflante). On notera que le capteur unique 48 pourrait, à l'aide d'un post traitement des données recueillies, déduire aussi cette distance entre chacune des buses et la surface du carter. Chaque buse est avantageusement équipée d'un circuit permettant de réguler la pression et la température en sortie de buse de telle façon à maîtriser les géométries ainsi que les temps et cycles de dépôt.

Les buses sont de préférence démontables et séparables de la pièce de support 56 de sorte que l'on puisse paramétrer le nombre de buses et leur géométrie (taille et section) en fonction du revêtement à mettre en oeuvre. Elles peuvent également être ajustables en hauteur en fonction de l'angle que définit le système de dépôt de matière filamentaire par rapport au carter. En outre, chaque buse peut être alimentée par des sources de matériaux différentes, selon le type de revêtement souhaité.

La pièce de support 56 peut présenter une liaison en pivot 58 par rapport à l'ensemble mécanique 44 qui le supporte. L'axe de ce pivot est orienté verticalement, c'est-à-dire parallèlement à celui des buses. Ainsi, en appliquant une rotation à la pièce de support, il est possible de contrôler les espacements entre les points de dépôt de matériau, quel que soit le sens de déplacement relatif des buses (axial ou azimutal) par rapport au carter de soufflante 20A.

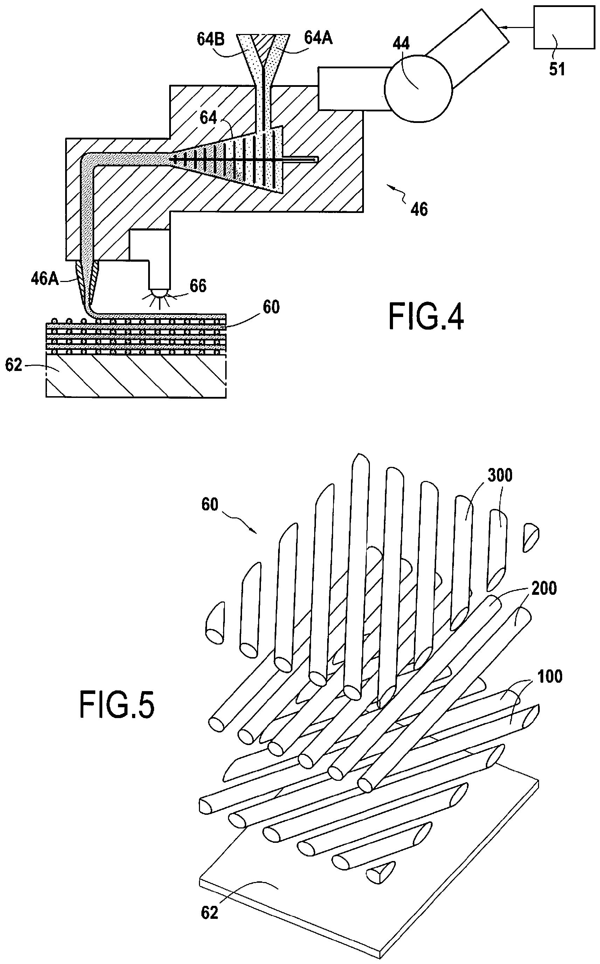

Le système de dépôt de matière filamentaire 46 est illustré de façon schématique à la figure 4. Ce système de dépôt filamentaire a pour objet de déposer en liaison avec le circuit précité de contrôle en pression et température interne au système, un matériau abradable par extrusion via la buse d'éjection 46A de forme et dimension calibrées tout d'abord sur le substrat 62 puis successivement sur les différentes couches superposées créées, jusqu'à obtention de l'épaisseur désirée. Le système de dépôt filamentaire suit une trajectoire de dépôt contrôlée par l'unité de gestion 51 à laquelle il est relié assurant la commande du système de dépôt filamentaire et contrôlant en tout point de la surface traitée à la fois l'arrangement filamentaire et la porosité du milieu nécessaires à garantir l'abradabilité souhaitée.

L'alimentation en matériau abradable est assurée à partir d'une vis à extrusion conique 64 permettant de mélanger plusieurs composants pour former un fluide thixotrope ayant l'aspect d'une pâte. La vis d'extrusion conique permet d'assurer un mélange adéquat des composants et homogène (tout au long de l'opération de dépôt), pour obtenir in fine un matériau fluide à haute viscosité qui va être déposé par la buse calibrée. Durant cette opération, il faut éviter la génération de bulles d'air qui forment autant de défaut dans le filament imprimé et il est donc nécessaire de pousser de manière très progressive le matériau. On notera que le changement de la constitution du matériau déposé peut être réalisé simplement par un contrôle des différents composants introduits successivement dans la vis à extrusion conique qui comporte au moins deux entrées 64A, 64B pour l'introduction simultanée des deux composants. Une lampe de chauffage 66 montée à proximité de la buse d'éjection 46A et faisant fonction de module de solidification peut être utilisée pour stabiliser le matériau déposé et éviter le fluage au cours du dépôt.

La figure 5 illustre en perspective éclatée une petite partie de l'échafaudage tridimensionnel 60 de filaments 100, 200, 300, avantageusement cylindriques, du matériau abradable permettant la réalisation du revêtement sous la forme d'un réseau ordonné de canaux de nature à conférer des propriétés acoustiques à une paroi 62 destinée à recevoir ce revêtement.

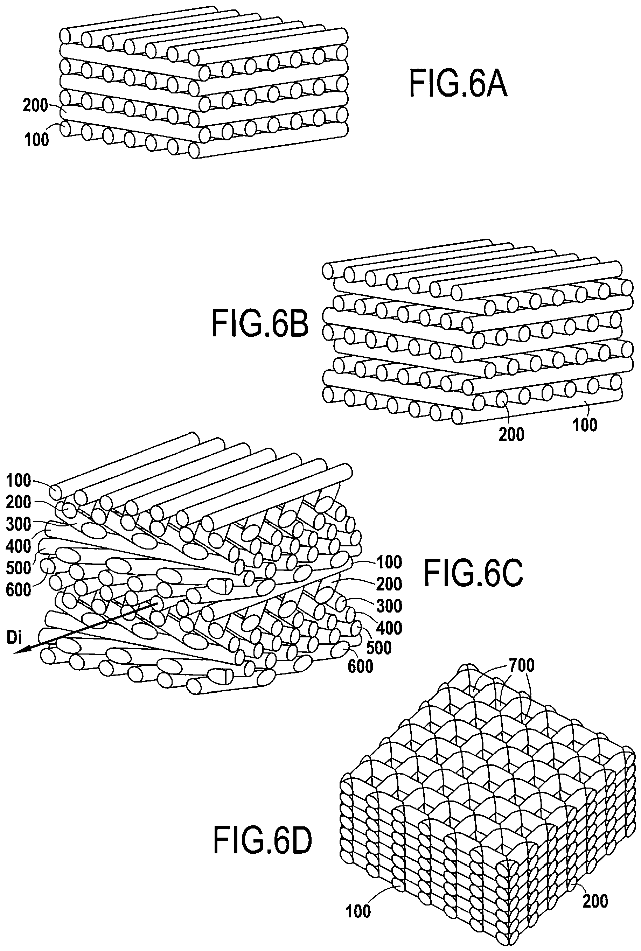

En effet, l'objectif est d'imprimer, dans la structure du matériau abradable, des motifs spécifiques ayant des porosités dimensionnées permettant le passage ou la dissipation des fluctuations aérodynamiques (voir leurs modifications) et/ou des ondes acoustiques. Ces motifs peuvent consister en des perforations ou des rainurages de dimensions inférieures à 1,5 mm permettant en outre d'améliorer les marges aérodynamiques. Mais, avantageusement, ces motifs sont constitués de canaux ou micro canaux formant un réseau ordonné comme le montrent les différentes configurations des figures 6A, 6B, 6C et 6D.

Sur la figure 6A, l'échafaudage tridimensionnel de filaments 100, 200 est constitué de couches superposées dont les filaments d'une couche donnée sont orientés alternativement à 0 ou à 90° sans décalage dans la superposition des filaments ayant une même direction.

Sur la figure 6B, l'échafaudage tridimensionnel de filaments 100, 200 est constitué de couches superposées dont les filaments d'une couche donnée sont orientés alternativement à 0 ou à 90° et présentent un décalage dans la superposition des filaments ayant une même direction.

Sur la figure 6C, l'échafaudage tridimensionnel de filaments 100, 200, 300, 400, 500, 600 est constitué de couches superposées présentant des directions d'orientation des filaments Di décalées d'un même écart angulaire, typiquement de 30°, à chaque couche i (i compris entre 1 et 6).

Et sur la figure 6D, l'échafaudage tridimensionnel de filaments 100, 200 est constitué de couches superposées présentant, pour chacune des couches, à la fois une orientation de filaments à 0° et une orientation de filaments à 90°, de façon à former des perforations verticales 700 de sections carrées entre les filaments.

Une impression sur un secteur de carter avec ces différentes configurations de réseau a montré la faisabilité d'un tel dépôt filamentaire de matériau abradable selon le procédé précité de fabrication additive. Des tests de comportement mécanique en compression et flexion ont aussi été réalisés ainsi que des échantillons destinés à un test d'impact basse énergie ou à une caractérisation de l'impédance acoustique en incidence normale. Notamment, il a été constaté une transmission de l'énergie acoustique au travers de l'échafaudage et une absorption d'une partie de cette énergie acoustique par modification des sources aéro-acoustique ou absorption des ondes sonores propagatrices.

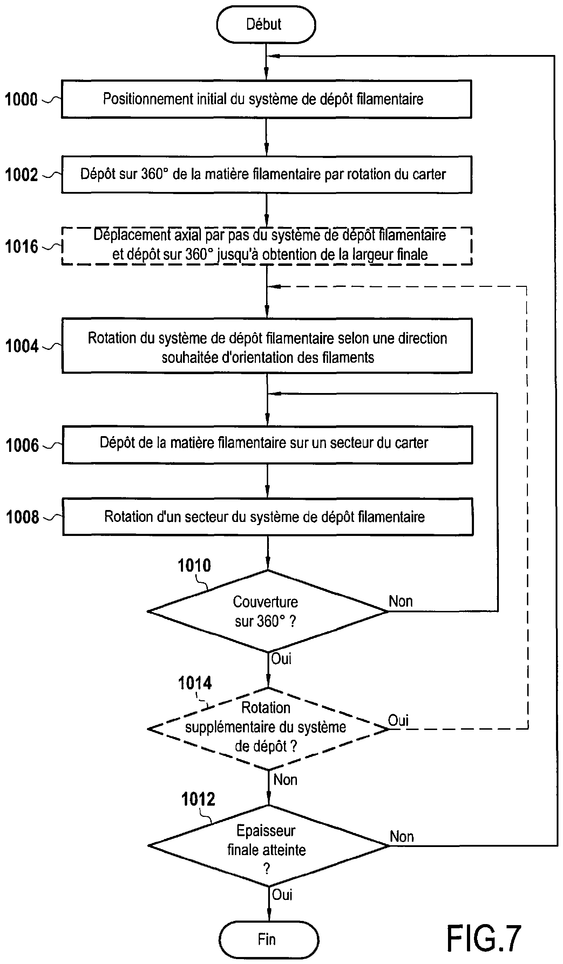

La figure 7 montre les différentes étapes du procédé de fabrication additive de revêtement sur un carter de soufflante pour une structure à mailles orthogonales telle que celle illustrée à la figure 6A obtenue avec le dispositif de la figure 3, le carter de soufflante 20A étant positionné sur son support de maintien 40 mobile en rotation.

Dans une première étape 1000, le système de dépôt filamentaire 46 se positionne par une série de translations verticales et axiale au-dessus de la zone de dépôt de matière, au niveau de l'axe 42 du carter de soufflante et à distance déterminée par rapport à la surface interne du carter de soufflante, et le support multi-buses est orienté parallèlement à l'axe 42 (position dite à 0°). Dans une étape suivante 1002, le carter de soufflante est mis en rotation entraînant alors un dépôt de matière dans des plans perpendiculaires à l'axe 42, sur les 360° de sa circonférence, avec autant de filaments de matière que de nombre de buses, la position verticale de chaque buse étant contrôlée individuellement. A l'étape 1004, le carter étant revenu dans sa position initiale, la rotation du carter de soufflante prend fin et la pièce de support des buses 56 effectue alors une rotation de 90° correspondant à la direction d'orientation des filaments de la seconde couche de revêtement. Dans une étape 1006, il est procédé au dépôt d'une première rangée de filaments de matière sur un premier secteur du carter par un déplacement axial du système de dépôt filamentaire 46, de sorte à effectuer un dépôt à 90° par rapport aux filaments de matières précédemment déposés circonférentiellement autour de l'axe 42. A l'étape suivante 1008, le carter de soufflante effectue une rotation correspondant à un écart angulaire déterminé égal au premier secteur déjà couvert puis il est fait retour à l'étape 1006 pour effectuer les dépôts sur les secteurs suivants jusqu'à couvrir les 360° de circonférence du carter (test de l'étape 1010). Les étapes 1000 à 1008 sont alors répétées jusqu'à obtenir l'épaisseur de matériau souhaitée (test final de l'étape 1012).

On notera que si dans la description précitée, le dépôt circonférentiel est effectué grâce à la rotation du carter, il est bien entendu que ce dépôt peut aussi être réalisé par rotation du système de dépôt filamentaire. De même, si le dépôt sectoriel est effectué grâce au déplacement axial du système de dépôt filamentaire, il est bien entendu que ce dépôt peut aussi être effectué par un déplacement axial du carter. L'important en effet est qu'il existe un déplacement relatif entre le carter et le système de dépôt filamentaire.

On notera également que si le procédé a été décrit en référence au support multi-buses, il est clair qu'il est aussi applicable à la configuration à buse unique de la figure 2 sous réserve de prévoir après chaque rotation à 360° un déplacement axial du système de dépôt filamentaire d'un pas déterminé (étape optionnelle 1016) pour, pas après pas, une fois l'ensemble des rotations à 360° achevé, couvrir toute la largeur du carter.

Dans la configuration de fabrication du revêtement ayant la structure à mailles inclinées à écarts angulaires réguliers (tous les 30°) telle que celle illustrée à la figure 6C, l'étape 1004 de rotation n'est plus de 90° mais seulement de 30°, de sorte à effectuer dans l'étape suivante 1006 le dépôt de la couche 200 à 30° et non plus à 90°. Et une fois cette seconde couche 200 déposée, une rotation supplémentaire de 30°, soit 60°, est effectuée suite au test de l'étape 1014 pour déposer la troisième couche 300 au lieu d'un retour à la position initiale à 0° qui n'est réalisée dans cette configuration qu'une fois déposée la couche 600 correspondant à la dernière direction d'orientation des filaments.

Il convient de noter qu'une couche supplémentaire peut être ajoutée en préalable à l'élaboration de cet échafaudage tridimensionnel. En effet, le carter de soufflante est un carter composite tissé 3D dont la géométrie tridimensionnelle présente généralement des déviations (défauts de forme) par rapport à la surface idéale calculée, du fait notamment de la tendance à la formation de lobes liée au procédé de tissage utilisé (classiquement de type poly-flex). Or, le rattrapage de ces défauts implique actuellement des opérations complexes et coûteuses. Il est donc possible avec le dispositif de déposer un matériau de rattrapage de jeu (résine ou autre) afin d'obtenir une géométrie connue. L'intérêt de cette étape préalable est de revenir à une surface de dépôt contrôlée, précisément définie et répondant aux contraintes de formes nécessaires pour assurer les bons jeux aérodynamiques de la zone moteur.

Il convient aussi de noter que des couches supplémentaires peuvent être ajoutées localement afin d'assurer l'axisymétrie de la surface abradable. En effet, les carters de soufflante présentent souvent une géométrie non axisymétrique.

Le matériau abradable extrudé par la ou les buses calibrées est avantageusement un matériau thermodurcissable à haute viscosité qui est dépourvu de solvant dont l'évaporation génère comme il est connu un fort retrait. Ce matériau est de préférence une résine à cinétique de polymérisation lente et écoulement filamentaire stable se présentant sous la forme d'un mélange thixotrope qui présente donc l'avantage d'un retrait beaucoup plus faible entre l'impression sur le substrat (juste après extrusion du matériau) et la structure finale (une fois chauffée et la polymérisation complète).

Un exemple de matériau abradable utilisé dans le cadre du procédé de l'invention est un matériau se présentant sous forme pâteuse et constitué de trois composants à savoir une base polymère, par exemple une résine époxyde (se présentant comme une pâte à modeler bleue), un agent de réticulation ou accélérateur (se présentant comme une pâte à modeler blanche) et une gelée de pétrole de couleur translucide (par exemple de la vaseline^{™}). Les composants accélérateur/base sont répartis selon un rapport pondéral de la base à l'accélérateur compris entre 1 :1 et 2:1 et la gelée de pétrole est présente entre 5 et 15% en poids du poids total du matériau. La base peut en outre comporter des microsphères de verres creuses d'un diamètre déterminé pour assurer la porosité désirée tout en permettant d'accroitre les performances mécaniques de l'échafaudage imprimé. L'intérêt de l'introduction de la gelée de pétrole réside dans la réduction de la viscosité de la résine ainsi que de la cinétique de réaction de l'abradable, ce qui rend sa viscosité plus stable durant le temps de l'impression et facilite ainsi l'écoulement du matériau. (La viscosité est directement liée à la pression d'extrusion nécessaire pour assurer la vitesse d'extrusion adéquate pour conserver la qualité de l'impression).

A titre d'exemple, un tel rapport de 2 :1 donne un matériau abradable comprenant 0.7g d'accélérateur et 1.4g de base auquel il convient d'ajouter 0.2g de gelée de pétrole.

Ainsi la présente invention permet une impression rapide et stable permettant de reproduire efficacement des structures acoustiques performantes contrôlées (rugosité, aspect, taux d'ouverture) ayant une faible taille de filament (<250 microns de diamètre) et un faible poids (taux de porosité amélioré > 70%) particulièrement intéressantes aux vues des contraintes fortes rencontrées en aéronautique.

## Revendications

1. Procédé de dépôt in situ par fabrication additive d'un revêtement abradable sur un carter de turbomachine consistant à déposer sur une surface interne dudit carter de turbomachine (20A, 62) un filament (100, 200, 300, 400, 500, 600) d'un matériau abradable selon une trajectoire de dépôt prédéfinie afin de créer un échafaudage tridimensionnel de filaments formant entre eux un réseau (60) ordonné de canaux, le procédé comprenant les étapes suivantes :
positionner un système de dépôt de matière filamentaire (46) au niveau d'un axe longitudinal (42) dudit carter à une position et une distance déterminée par rapport à ladite surface interne dudit carter,
déposer une première couche dudit revêtement abradable sur les 360° de la circonférence dudit carter par un déplacement circonférentiel relatif entre ledit carter et ledit système de dépôt de matière filamentaire (46),
effectuer une rotation dudit système de dépôt de matière filamentaire (46) d'un premier angle déterminé et positionner ledit système de dépôt de matière filamentaire (46) au niveau dudit axe longitudinal dudit carter à une position et une distance déterminée par rapport à ladite première couche dudit revêtement abradable,
déposer sur un secteur dudit carter par un déplacement axial relatif entre ledit carter et ledit système de dépôt de matière filamentaire, une deuxième couche dudit revêtement abradable sur ladite première couche dudit revêtement abradable,
effectuer un déplacement circonférentiel relatif entre ledit carter et ledit système de dépôt de matière filamentaire (46) d'un écart angulaire déterminé correspondant au premier secteur déjà couvert lors du dépôt de ladite deuxième couche de revêtement abradable,
et répéter l'étape de dépôt sur ledit secteur de carter et l'étape de déplacement circonférentiel relatif selon ledit écart angulaire déterminé pour les secteurs suivants jusqu'à couvrir les 360° de la circonférence dudit carter, et
après avoir effectué une rotation dudit système de dépôt de matière filamentaire d'un deuxième angle déterminé, reprendre l'ensemble des étapes précédentes pour les couches suivantes jusqu'à obtenir une épaisseur de revêtement abradable souhaitée.

2. Procédé de dépôt in situ par fabrication additive de revêtement selon la revendication 1, dans lequel préalablement au dépôt de ladite première couche dudit revêtement abradable, il est déposé sur ledit carter de turbomachine une couche d'un matériau de rattrapage de jeu pour obtenir une surface de dépôt de géométrie connue.

3. Procédé de dépôt in situ par fabrication additive de revêtement selon la revendication 1 ou la revendication 2, dans lequel ladite étape de rotation dudit système de dépôt filamentaire est effectuée deux fois par rotation successive de 90°, le premier angle déterminé étant égal à 90°.

4. Procédé de dépôt in situ par fabrication additive de revêtement selon la revendication 1 ou la revendication 2, dans lequel ladite étape de rotation dudit système de dépôt filamentaire est effectuée autant de fois qu'il existe de directions déterminées d'orientation des filaments différentes.

5. Procédé de dépôt in situ par fabrication additive de revêtement selon la revendication 4, dans lequel ladite étape de rotation dudit système de dépôt filamentaire est effectuée six fois par rotation successive de 30°, le premier angle déterminé étant égal à 30°.

6. Procédé dépôt in situ par de fabrication additive de revêtement selon l'une quelconque des revendications 1 à 5, dans lequel des couches supplémentaires dudit revêtement abradable sont ajoutées localement pour tenir compte d'une géométrie non axisymétrique dudit carter de turbomachine.

7. Procédé dépôt in situ par de fabrication additive de revêtement selon l'une quelconque des revendications 1 à 6, dans lequel le dépôt de matière filamentaire est effectué par une pluralité de buses d'éjection (54A-54E) dont le positionnement vertical de chacune desdites buses d'éjection est ajustable de façon indépendante.

8. Procédé de dépôt in situ par fabrication additive de revêtement selon l'une quelconque des revendications 1 à 7, dans lequel ledit carter de turbomachine est un carter de soufflante en matériau composite tissé.

## Patentansprüche

1. Verfahren zur Abscheidung einer verschleißbaren Beschichtung in situ auf einem Gehäuse einer Turbomaschine durch additive Fertigung, wobei das Verfahren darin besteht, auf einer Innenfläche des Turbomaschinengehäuses (20A, 62) ein Filament (100, 200, 300, 400, 500, 600) aus einem verschleißbaren Material entlang einer vordefinierten Abscheidungsbahn abzuscheiden, um ein dreidimensionales Gerüst aus Filamenten zu erzeugen, die untereinander ein geordnetes Netz (60) von Kanälen bilden, wobei das Verfahren die folgenden Schritte umfasst:
Positionieren eines Abscheidungssystems für Filamentmaterial (46) an einer Längsachse (42) des Gehäuses an einer bestimmten Position und in einem bestimmten Abstand in Bezug auf die Innenfläche des Gehäuses,
Abscheiden einer ersten Schicht der verschleißbaren Beschichtung über 360° des Umfangs des Gehäuses durch eine relative Umfangsbewegung zwischen dem Gehäuse und dem Abscheidungssystem für Filamentmaterial (46),
Durchführen einer Drehung des Abscheidungssystems für Filamentmaterial (46) um einen ersten bestimmten Winkel und Positionieren des Abscheidungssystems für Filamentmaterial (46) an der Längsachse des Gehäuses an einer bestimmten Position und in einem bestimmten Abstand in Bezug auf die erste Schicht der verschleißbaren Beschichtung,
Abscheiden einer zweiten Schicht der verschleißbaren Beschichtung auf einem Sektor des Gehäuses durch eine relative axiale Bewegung zwischen dem Gehäuse und dem Abscheidungssystem für Filamentmaterial auf der ersten Schicht der verschleißbaren Beschichtung,
Durchführen einer relativen Umfangsbewegung zwischen dem Gehäuse und dem Abscheidungssystem für Filamentmaterial (46) um einen bestimmten Winkelabstand, der dem ersten Sektor entspricht, der bereits beim Abscheiden der zweiten Schicht der verschleißbaren Beschichtung bedeckt wurde,
und Wiederholen des Schritts des Abscheidens auf dem Sektor des Gehäuses und des Schritts der relativen Umfangsbewegung gemäß dem bestimmten Winkelabstand für die folgenden Sektoren, bis die 360° des Umfangs des Gehäuses bedeckt sind, und
nachdem eine Drehung des Abscheidungssystems für Filamentmaterial um einen zweiten bestimmten Winkel durchgeführt wurde, Wiederholen der gesamten vorhergehenden Schritte für die folgenden Schichten, bis eine gewünschte Dicke der verschleißbaren Beschichtung erreicht ist.

2. Verfahren zur Abscheidung einer Beschichtung in situ durch additive Fertigung nach Anspruch 1, wobei vor der Abscheidung der ersten Schicht der verschleißbaren Beschichtung auf dem Turbomaschinengehäuse eine Schicht eines Materials zum Spielausgleich abgeschieden wird, um eine Abscheidungsfläche mit bekannter Geometrie zu erhalten.

3. Verfahren zur Abscheidung einer Beschichtung in situ durch additive Fertigung nach Anspruch 1 oder Anspruch 2, wobei der Schritt des Drehens des Abscheidungssystems für Filamentmaterial zweimal durch aufeinanderfolgende Drehung um 90° durchgeführt wird, wobei der erste bestimmte Winkel gleich 90° ist.

4. Verfahren zur Abscheidung einer Beschichtung in situ durch additive Fertigung nach Anspruch 1 oder Anspruch 2, wobei der Schritt des Drehens des Abscheidungssystems für Filamentmaterial so oft durchgeführt wird, wie unterschiedliche bestimmte Richtungen der Ausrichtung der Filamente vorhanden sind.

5. Verfahren zur Abscheidung einer Beschichtung in situ durch additive Fertigung nach Anspruch 4, wobei der Schritt des Drehens des Abscheidungssystems für Filamentmaterial sechsmal durch aufeinanderfolgende Drehung um 30° durchgeführt wird, wobei der erste bestimmte Winkel gleich 30° ist.

6. Verfahren zur Abscheidung einer Beschichtung in situ durch additive Fertigung nach einem der Ansprüche 1 bis 5, wobei zusätzliche Schichten der verschleißbaren Beschichtung lokal hinzugefügt werden, um eine nicht achsensymmetrische Geometrie des Turbomaschinengehäuses zu berücksichtigen.

7. Verfahren zur Abscheidung einer Beschichtung in situ durch additive Fertigung nach einem der Ansprüche 1 bis 6, wobei die Abscheidung von Filamentmaterial durch mehrere Ausstoßdüsen (54A-54E) durchgeführt wird, wobei die vertikale Positionierung jeder der Ausstoßdüsen auf unabhängige Weise einstellbar ist.

8. Verfahren zur Abscheidung einer Beschichtung in situ durch additive Fertigung nach einem der Ansprüche 1 bis 7, wobei das Turbomaschinengehäuse ein Gebläsegehäuse aus gewebtem Verbundmaterial ist.

## Claims

1. An in situ deposition method of an abradable coating by additive manufacturing on a turbomachine casing, consisting of depositing on an internal surface of said turbomachine casing (20A, 62) a filament (100, 200, 300, 400, 500, 600) of an abradable material in a predefined deposition path in order to create a three-dimensional scaffold of filaments forming between them an ordered array (60) of channels, the method comprising the following steps :
positioning a filamentary material deposition system (46) along a longitudinal axis (42) of said casing at a predetermined position and distance relative to said internal surface of said casing,
depositing a first layer of said abradable coating on 360° of the circumference of said casing by a relative circumferential displacement between said casing and said filamentary material deposition system (46),
carrying out a rotation of said filamentary material deposition system (46) by a first predetermined angle and positioning said filamentary material deposition system (46) along said longitudinal axis of said casing at a predetermined position and distance relative to said first layer of said abradable coating,
depositing, on a sector of said casing by a relative axial displacement between said casing and said filamentary material deposition system, a second layer of said abradable coating on said first layer of said abradable coating,
carrying out a relative circumferential displacement between said casing and said filamentary material deposition system (46) by a predetermined angular deviation corresponding to the first sector already covered during the deposition of said second abradable coating layer,
and repeating the step of depositing on said casing sector and the step of relative circumferential displacement by said predetermined angular deviation for the following sectors until 360° of the circumference of said casing are covered, and
after having carried out a rotation of said filamentary material deposition system by a second predetermined angle, repeating all the preceding steps for the following layers until a desired abradable coating thickness is obtained.

2. The in situ deposition method of a coating by additive manufacturing according to claim 1, in which, prior to the deposition of said first layer of said abradable coating, a layer of a clearance compensating material is deposited on said turbomachine casing to obtain a deposition surface with known geometry.

3. The in situ deposition method of a coating by additive manufacturing according to claim 1 or claim 2, in which said step of rotation of said filamentary deposition system is carried out twice by successive 90° rotation, the first predetermined angle being equal to 90°.

4. The in situ deposition method of a coating by additive manufacturing according to claim 1 or claim 2, in which said step of rotation of said filamentary deposition system is carried out as many times as there exist different predetermined orientation directions of the filaments.

5. The in situ deposition method of a coating by additive manufacturing according to claim 4, in which said step of rotation of said filamentary deposition system is carried out six times by successive 30° rotation, the first predetermined angle being equal to 30°.

6. The in situ deposition method of a coating by additive manufacturing according to any one of claims 1 to 5, in which additional layers of said abradable coating are added locally to take into account a non-axisymmetric geometry of said turbomachine casing.

7. The in situ deposition method of a coating by additive manufacturing according to any one of claims 1 to 6, in which the deposition of filamentary material is carried out by a plurality of ejection nozzles (54A-54E) in which the vertical positioning of each of said ejection nozzles is independently adjustable.

8. The in situ deposition method of a coating by additive manufacturing according to any one of claims 1 to 7, in which said turbomachine casing is a fan casing of woven composite material.
